**Europäisches Patentamt**

**European Patent Office**

**Office européen des brevets**

(19)

(11) Numéro de publication: **0 010 478**

**A1**

(12)

# DEMANDE DE BREVET EUROPEEN

(21) Numéro de dépôt: **79400708.8**

(22) Date de dépôt: **05.10.79**

(51) Int. Cl.³: **C 08 L 83/04**
**B 29 C 1/02**

(30) Priorité: 24.10.78 FR 7830150

(43) Date de publication de la demande:
**30.04.80 Bulletin 80/9**

(84) Etats Contractants Désignés:
**DE NL SE**

(71) Demandeur: **RHONE-POULENC INDUSTRIES**
**22, avenue Montaigne**
**F-75008 Paris(FR)**

(72) Inventeur: **Gibard, André**
**7, rue Danielle Casanova**
**F-69200 Venissieux(FR)**

(74) Mandataire: **Fichet, Edouard et al,**
**RHONE POULENC Service Brevets Chimie et polymères**
**Boîte Postale 753**
**F-75360 - Paris Cedex 08(FR)**

(54) Compositions organopolysiloxaniques durcissables en élastomères pour la fabrication de moules.

(57) Compositions organopolysiloxaniques comprenant pour 100 parties en poids d'huile $\alpha$ - $\omega$ dihydroxydiorganopolysiloxanique de viscosité 600 à 100 000 mPa.s à 25°C, 1, 5 à 12 parties de trialcoxysilanes ou de tétraalcoxysilanes ou de produits d'hydrolyse de tétraalcoxysilanes, 10 à 150 parties de charges, des huiles dihydroxypolysiloxaniques de viscosité 10 à 350 mPa.s à 25°C et des composés $(R''COO)_2 SnO_2$.

Ces compositions sont caractérisées en ce que les huiles de viscosité 10 à 350 mPa.s sont utilisées à raison de 7 à 23 parties pour 1 partie d'étain et que les composés $(R''COO)_2SnO_2$ sont introduits de manière à fournir 0,22 à 1 partie d'étain dans 100 parties des compositions.

Ces compositions servent à la préparation de moules, en particulier pour le moulage des polyuréthannes.

EP 0 010 478 A1

Croydon Printing Company Ltd

1

# COMPOSITIONS ORGANOPOLYSILOXANIQUES DURCISSABLES EN ELASTOMERES POUR LA FABRICATION DE MOULES

La présente invention a pour objet des compositions organopolysiloxaniques "bicomposantes", durcissant, dès la température ambiante, en élastomères silicones qui sont destinés plus spécialement au moulage d'objets en mousses de polyuréthanne.

Les compositions organopolysiloxaniques bicomposantes, utilisables pour la préparation de moules en élastomères silicones, ont déjà été proposées sur le marché industriel et dans la littérature chimique (brevet français 1 418 114 demande japonaise 50 066 553). Ces compositions peuvent renfermer divers additifs (qui facilitent leur mise en oeuvre ou leur transformation en élastomères) tels que des huiles $\alpha$ - $\omega$ dihydroxydiorganopolysiloxaniques de faible viscosité (demandes françaises 2 272 145 et 2 300 114).

Les moules fabriqués ont la particularité de reproduire avec finesse et précision les détails des modèles ; ils permettent, en outre, du fait du caractère antiadhérent du caoutchouc silicone, d'améliorer les cadences de démoulages. Il peut se produire, toutefois, au cours des cycles successifs de fabrication des pièces moulées, une attaque plus ou moins rapide des parois internes des moules par un ou plusieurs constituants des mélanges versés dans les moules.

Lorsque ces mélanges renferment des constituants peu agressifs, il n'est pas nécessaire d'utiliser des moyens de protection des parois des moules ; c'est le cas des mélanges organiques conduisant à des pièces moulées en polyester, polystyrène, polyéthylène, polychlorure de vinyle. En effet ces moyens compliquent les cycles moulages-démoulages et la dépense engendrée par leur utilisation peut dépasser le gain obtenu par l'augmentation du nombre de pièces moulées.

Par contre, lorsque les constituants sont agressifs, (il en est ainsi de ceux entrant dans les mélanges pour pièces moulées en polyuréthanne et plus précisément en mous -ses de polyuréthanne) il est alors indispensable d'employ-

2

er des moyens qui neutralisent cette agressivité sinon le nombre de pièces moulées tombe à une valeur qui peut être le tiers ou le quart de celle enregistrée avec des mélanges à constituants peu agressifs.

Parmi les moyens les plus efficaces et les plus simples à mettre en oeuvre, il faut citer l'application préalable, sur les parois internes des moules, de composés organiques filmogènes ; il se forme ainsi une fine couche d'un revêtement protecteur (brevets français 2 040 714, 2 043 388, demande japonaise déposée 49 005160). Cette application a lieu, de préférence, par pulvérisations de solutions de composés filmogènes dans des solvants organiques; elle est assez facile à réaliser avec des moules ayant une surface interne peu tourmentée, accessible et de faibles dimensions. Avec des moules de grandes dimensions, dont les parois présentent un relief compliqué, tels ceux utilisés pour la reproduction de tableaux de bord et d'objets d'art, il est très difficile d'obtenir un revêtement filmogène uniforme et continu. De plus un tel traitement nécessite d'une part la disponibilité de grandes surfaces pour le séchage des parois des moules et d'autre part l'emploi d'un dispositif de récupération des solvants.

Il est donc souhaitable de trouver des moyens encore plus simples et surtout moins coûteux qui permettent d'atteindre un nombre élevé de pièces moulées en polyuréthanne pour chaque moule en élastomère silicone.

A cette fin, la présente invention propose, pour la réalisation de moules en élastomères silicones résistant aux mélanges transformables en polyuréthanne, des compositions organopolysiloxaniques, durcissant dès la température ambiante, comportant : (les parties sont exprimées en poids).

A/ - 100 parties d'huiles $\alpha$ - $\omega$ dihydroxydiorganopolysiloxaniques, de viscosité 600 à 100 000 mPa.s à 25°C, ayant des radicaux organiques liés aux atomes de silicium choisis parmi les radicaux méthyles, éthyles, n-propyles, vinyles, phényles, au moins 80% de ces radicaux sont des radicaux méthyles et au plus 5% sont des radicaux vinyles.

B/ - 1,5 à 12 parties d'agents réticulants choisis parmi :

(i) les silanes de formule $R_a Si(OR')_{4-a}$ dans laquelle le symbole R représente un radical hydrocarboné, halogéné ou non ayant de 1 à 8 atomes de carbone, un radical cyanoalcoyle ayant de 3 à 4 atomes de carbone ; les symboles R', identiques ou différents, représentent des radicaux alcoyles ayant de 1 à 4 atomes de carbone, des radicaux de formule $-CH_2CH_2OG$ dans laquelle le symbole G représente un radical méthyle ou éthyle ; le symbole a représente zéro ou 1.

(ii) les produits d'hydrolyse partielle des silanes de formule $Si(OR')_4$, les symboles R', ayant la signification donnée sous (i).

C/ - 10 à 150 parties de charges pulvérulentes.

D/ - des huiles $\alpha$ - $\omega$ dihydroxydiorganopolysiloxaniques de viscosité 10 à 350 mPa.s à 25°C, ayant des radicaux organiques, liés aux atomes de silicium, choisis parmi les radicaux méthyles, vinyles, phényles, au moins 50% de ces radicaux sont des radicaux méthyles et au plus 3% sont des radicaux vinyles.

E/ - des catalyseurs de formule $(R''COO)_2 SnQ_2$, dans laquelle les symboles R'', identiques ou différents, représentent des radicaux hydrocarbonés aliphatiques ayant de 6 à 25 atomes de carbone ; les symboles Q, identiques ou différents représentent des radicaux alcoyles ayant de 1 à 6 atomes de carbone.

caractérisées en ce que :

1) les huiles D/ sont utilisées à raison de 7 à 23 parties, de préférence 8 à 21 parties, pour 1 partie d'étain apportée par les catalyseurs E/.

2) les catalyseurs E/ sont introduits en une quantité suffisante pour fournir de 0,22 à 1 partie d'étain, de préférence 0,25 à 0,95 partie, dans 100 parties des compositions.

Les huiles $\alpha$ - $\omega$ dihydroxydiorganopolysiloxaniques A/, dont la viscosité varie de 600 à 100 000 mPa.s à 25°C, de préférence de 1 000 à 80 000 mPa.s à 25°C, sont des poly-

4

mères linéaires constitués essentiellement de motifs diorganosiloxyles de formule $Z_2SiO$ et bloqués à chaque extrémité de leur chaîne par un groupe hydroxyle ; toutefois la présence de motifs monoorganosiloxyles de formule $ZSiO_{1,5}$ et/ou de motifs siloxyles de formule $SiO_2$ n'est pas exclue dans la proportion d'au plus 2% par rapport au nombre de motifs diorganosiloxyles.

Les symboles Z, identiques ou différents, représentent les radicaux organiques décrits précédemment, c'est-à-dire des radicaux méthyles, éthyles, n-propyles, vinyles, phényles ; de préférence ces radicaux sont des radicaux méthyles.

A titre illustratif de motifs représentés par la formule $Z_2SiO$ peuvent être cités ceux répondant aux formules : $(CH_3)_2SiO$ ; $CH_3(CH_2=CH)SiO$ ; $CH_3(C_6H_5)SiO$ ; $(C_6H_5)_2SiO$ ; $(CH_3)C_2H_5SiO$ ; $CH_3(n-C_3H_7)SiO$.

Les huiles A/ sont généralement commercialisées par les fabricants de silicones. Par ailleurs leurs procédés de fabrication sont bien connus, ils figurent par exemple dans les brevets français 1 134 005, 1 198 749, 1 226 745.

L'un des procédés les plus courants consiste, dans une première phase, à polymériser des diorganocyclopolysiloxanes à l'aide de quantités catalytiques d'agents alcalins ou acides puis à traiter les polymérisats avec des quantités calculées d'eau. Ces quantités d'eau sont d'autant plus élevées que les huiles à préparer ont une viscosité plus faible. Ensuite, dans une 2ème phase, les huiles sont isolées en éliminant, à une température en général supérieure à 100°C et sous une pression de préférence inférieure à la pression atmosphérique, les diorganocyclopolysiloxanes de départ équilibrant la réaction ainsi que les polymères de poids moléculaire peu élevé formés lors de cette réaction. Il est recommandé, avant de distiller les produits volatils, de neutraliser les agents alcalins ou acides utilisés comme catalyseurs de polymérisation.

Les huiles A/ peuvent être utilisées seules ou sous la forme de mélanges comportant au moins 2 huiles de viscosités différentes.

Les agents réticulants B/ sont introduits dans les compositions de l'invention à raison de 1,5 à 12 parties, de préférence 1,7 à 10 parties, pour 100 parties des huiles A/. Ils sont choisis parmi les silanes de formule $R_a Si(OR')_{4-a}$ et les polymères découlant de l'hydrolyse partielle des silanes de formule $Si(OR')_4$.

A titre illustratif de radicaux hydrocarbonés, halogénés ou non, ayant de 1 à 8 atomes de carbone, représentés par le symbole R, peuvent être cités :

- les radicaux alcoyles, halogénés ou non, ayant de 1 à 6 atomes de carbone tels que méthyles, éthyles, n-propyles, n-butyles, n-pentyles, n-hexyles, chlorométhyles, tri-fluoro-3,3,3 propyles.
- les radicaux alcényles ayant de 2 à 3 atomes de carbone tels que vinyles, allyles.
- les radicaux cycloalcoyles et halogénocycloalcoyles ayant de 3 à 7 atomes de carbone, tels que cyclopentyles, cyclohexyles, méthylcyclohexyles, dichloro-2,2 cyclopropyles, difluoro-2,2 cyclopropyles, chlorocyclohexyles.
- les radicaux aryles et halogénoaryles mononucléaires, ayant de 6 à 8 atomes de carbone, tels que phényles, to-tyles, xylyles, chlorophényles, trichlorophényles.

Quant aux radicaux cyanoalcoyles ayant de 3 à 4 atomes de carbone représentés par le symbole R, ils englobent plus précisément les radicaux $\beta$-cyanoéthyles et $\gamma$-cyanopropyles.

A titre illustratif de radicaux alcoyles, ayant de 1 à 4 atomes de carbone, représentés par les symboles R', peuvent être cités les radicaux méthyles, éthyles, n-propyles isopropyles, n-butyles.

Comme exemplesconcrets de monomères de formule $R_a Si(OR')_{4-a}$ peuvent être cités le méthyltriméthoxysilane le méthyltriéthoxysilane, le chlorométhyltriméthoxysilane, l'éthyltriméthoxysilane, le vinyltriméthoxysilane, le cyclohexyltriméthoxysilane, le dichloro-2,2 cyclopropyl-triéthoxysilane, le phényltris ($\beta$-méthoxyéthoxy)silane le tétraméthoxysilane, le tétraéthoxysilane, le

6

le tétra(n-butoxy)silane, le tétra($\beta$-méthoxyéthoxy)silane, le tétra(n-propoxy)silane, le tétra($\beta$-éthoxyéthoxy)
silane, les silanes mixtes de formules moyennes $Si(OC_2H_5)_b$
$(O\ n-C_3H_7)_{4-b}$ et $Si(OCH_3)_b(O\ n-C_4H_9)_{4-b}$ dans lesquelles
le symbole b représente un nombre quelconque allant de 0,3
à 3,7. Ces silanes mixtes peuvent être des produits purs
ou des mélanges ; ils sont préparés, par exemple, par chauffage, dans un même réacteur, de deux tétraalcoxysilanes,
dont l'un des silanes porte des radicaux éthoxyles et
l'autre n-propoxyles ou bien dont l'un des silanes porte
des radicaux méthoxyles et l'autre n-butoxyles.

Les polymères découlant de l'hydrolyse partielle des
silanes de formule $Si(OR')_4$, par exemple des tétraéthoxysilanes, tétra(n-propoxy)silanes et silanes mixtes décrits
ci-dessus, sont constitués en forte proportion de motifs
de formule $(R'O)_2SiO$, les autres motifs ayant pour formules $(R'O)_3SiO_{0,5}$, $(R'O)SiO_{1,5}$ et $SiO_2$.

Pour caractériser ces polymères appelés usuellement
"polysilicates" on peut se baser sur leur teneur en groupes
alcoxy et/ou en silice.

Leurs procédés de préparation sont bien connus ; ils
sont décrits en particulier dans l'ouvrage "Chemistry and
Technology of Silicones" de W. Noll - pages 648 à 653.

Les polysilicates ainsi préparés doivent cependant posséder, afin d'être compatibles et/ou réactifs avec les autres ingrédients mis en oeuvre pour la préparation des
compositions de l'invention (en particulier avec les huiles A et les huiles D), la faculté de se dissoudre dans les
solvants hydrocarbonés tels que le toluène, le xylène, le
méthylcyclohexane, dans la proportion d'au moins 50 parties
de polysilicates pour 100 parties de solvants.

Les charges C/ sont introduites à raison de 10 à 150
parties, de préférence de 15 à 140 parties, pour 100 parties des huiles A/. Elles sont choisies, de préférence,
parmi les matériaux pulvérulents de diamètre particulaire
moyen supérieur à 0,1 micron tels que la silice de diatomées, le quartz broyé, les silicates d'aluminium, les si-

7

licates mixtes d'aluminium et de magnésium, la poudre de mica, le carbonate de calcium, la poudre de verre, les oxydes d'aluminium, de titane, de fer, de zinc, de chrome, de zirconium, de magnésium, le nitrure de bore, le lithopone, le graphite, les fibres de verre, les fibres et poudres en polymères synthétiques.

Ces charges peuvent être éventuellement modifiées en surface par traitement avec des composés organosiliciques de faible poids moléculaire tels que des diorganocyclopolysilazanes, des diorganocyclopolysiloxanes, de l'hexaméthyldisilazane . Les charges ainsi traitées renferment de 3 à 30%, par rapport à leur poids initial, de composés organosiliciques.

L'emploi de matériaux de diamètre particulaire inférieur à 0,1 micron, tels que les silices de combustion et de précipitation n'est pas exclu ; il n'est cependant pas recommandé ⎡surtout en quantités supérieures à 30 parties pour 100 des huiles A⎤ car il provoque une nette augmentation de la viscosité des compositions rendant ainsi difficile leur mise en oeuvre par coulée.

Les huiles $\alpha - \omega$ dihydroxydiorganopolysiloxaniques D/ sont introduites à raison de 7 à 23 parties, de préférence 8 à 21 parties, pour 1 partie d'étain apportée par les catalyseurs E/.

Ce sont également des polymères linéaires, de viscosité 10 à 350 mPa.s à 25°C, de préférence 15 à 300 mPa.s à 25°C, constitués de motifs diorganosiloxyles de formule $Z'_2SiO$, et bloqués à chaque extrémité de leur chaîne par un radical hydroxyle. Les symboles Z', identiques ou différents, représentent des radicaux méthyles, vinyles, phényles, de préférence des radicaux méthyles.

A titre illustratif de motifs, représentés par la formule $Z'_2SiO$, peuvent être cités ceux répondant aux formules $(CH_3)_2SiO$ ; $CH_3(CH_2=CH)SiO$ ; $CH_3(C_6H_5)SiO$ ; $(C_6H_5)_2SiO$ ; $CH_2=CH(C_6H_5)SiO$.

Les huiles D/ sont commercialisées par les fabricants de silicones ; elles peuvent, en outre, être aisément fabriquées par simple hydrolyse de diorganodichlorosilanes ou de diorganodiacetoxysilanes dans un milieu aqueux renfermant un agent basique tel que l'ammoniaque ou le bicarbonate de sodium. D'autres procédés peuvent être mis en oeuvre, par exemple la polymérisation d'hexaorganocyclotrisiloxanes à l'aide d'argile activée par un acide, en milieu eau-acétone.

Les catalyseurs E/ sont introduits dans les compositions de l'invention en des quantités suffisantes pour fournir de 0,22 à 1 partie d'étain, de préférence de 0,25 à 0,95 partie d'étain, pour 100 parties des compositions de l'invention. Ils répondent à la formule précitée $(R''COO)_2 SnQ_2$.

Les radicaux hydrocarbonés aliphatiques ayant de 6 à 25 atomes de carbone, représentés par le symbole R", englobent les radicaux alcoyles et alcényles linéaires ou ramifiés.

Comme exemples concrets de tels radicaux alcoyles peuvent être cités les radicaux éthyl-2 hexyles, n-octyles, n-décyles, n-dodecyles, n-tétradécyles, n-pentadécyles, n-hexadécyles, n-octadécyles, n-eicosyles, n-docosyles, n-pentacosyles.

Comme exemples concrets de tels radicaux alcényles peuvent être cités les radicaux répondant aux formules : -

$$CH_3-CH=CH-(CH_2)_5- \qquad ; \qquad CH_3(CH_2)_4CH=CH(CH_2)_5-$$
$$CH_3(CH_2)_7CH=CH(CH_2)_8- \qquad ; \qquad CH_3(CH_2)_4CH=CH-CH_2-CH=CH(CH_2)_8-$$
$$CH_3(CH_2)_4-(CH=CH-CH_2)_4-(CH_2)_3- \qquad ; \qquad CH_3-CH=CH(CH_2)_3-$$

Par ailleurs comme exemples concrets de radicaux alcoyles ayant de 1 à 6 atomes de carbone, représentés par les symboles Q, peuvent être cités les radicaux méthyles, éthyles, isopropyles, n-propyles, n-butyles, isobutyles, n-pentyles, n-hexyles.

Les catalyseurs E/ peuvent être des produits purs ou des mélanges ; ces derniers sont préparés, par exemple, par réaction de mélanges d'acides carboxyliques (provenant de glycérides naturels tels que les huiles de coprah, de palme) sur des oxydes de diorganoétains.

9

A titre illustratif de ces catalyseurs E/ peuvent être cités ceux répondant aux formules suivantes :

$[CH_3(CH_2)_{10}COO]_2Sn(n-C_4H_9)_2$ ; $[CH_3(CH_2)_{10}COO]_2Sn(CH_3)_2$

$[CH_3(CH_2)_3CH(C_2H_5)COO]_2Sn(CH_3)_2$ ;

$[CH_3(CH_2)_3CH(C_2H_5)COO]_2Sn(n-C_4H_9)_2$

$[CH_3(CH_2)_{12}COO]_2Sn(C_2H_5)_2$ ; $[CH_3(CH_2)_{14}COO]_2Sn(C_2H_5)_2$

$[CH_3(CH_2)_7CH=CH(CH_2)_8]_2Sn(n-C_4H_9)_2$.

En dehors des constituants A/, B/, C/, D/, E/, des adjuvants divers peuvent être introduits dans les compositions de l'invention, tels que des pigments minéraux ou organiques, des agents améliorant la résistance à la flamme. Ces pigments et agents représentent ensemble au plus 15% du poids des charges C/.

En outre, des additifs à base de polymères organopolysiloxaniques ou de composés organiques, qui agissent sur les caractéristiques physiques des compositions et sur les propriétés mécaniques des élastomères, peuvent être utilisés à raison d'au plus 50 parties, de préférence 3 à 40 parties, pour 100 parties des huiles A/.

Parmi ces additifs il faut plus spécialement mentionner : 1) les huiles $\alpha$ - $\omega$ bis(triorganosiloxy) diorganopolysiloxaniques de viscosité allant de 10 mPa.s à 25°C à 150 000 mPa.s à 25°C, formées essentiellement des motifs de formule précitée $Z'_2SiO$ et de motifs terminaux de formule $Z'_3SiO_{0,5}$ (dans lesquelles les symboles $Z'$ ont la signification indiquée précédemment relative aux motifs des huiles D/). Au moins 80% des radicaux représentés par les symboles $Z'$ sont des radicaux méthyles et au plus 3% sont des radicaux vinyles.

Ces huiles sont commercialisées par les fabricants de silicones et peuvent être préparées en opérant selon des techniques maintenant bien au point, décrites, par exemple, dans les brevets français 978 058, 1 025 150 et 1 108 764.

De préférence sont utilisées les huiles $\alpha$ - $\omega$ bis(triméthylsiloxy) diméthylpolysiloxaniques de viscosité allant de 50 mPa.s à 25°C à 80 000 mPa.s à 25°C.

2) les composés organiques inertes vis-à-vis des constituants A/, B/, C/, D/, E/, et aptes à se disperser aisément dans les compositions et à ne pas exsuder des élastomères.

A titre illustratif de ces composés organiques peuvent être mentionnés :

- les acides monocarboxyliques aliphatiques ayant de 6 à 25 atomes de carbone, tels que l'acide éthyl-2 hexanoique, laurique, palmitique, stéarique, oléique, linoléique, linolénique.

- les esters, préparés à partir des acides monocarboxyliques aliphatiques précités et des monoalcools aliphatiques ayant de 2 à 20 atomes de carbone tels que l'éthanol, le propanol, l'isopropanol, l'éthyl-2 hexanol, l'octanol, le décanol, le dodécanol, le pentadécanol, l'octadécanol, l'eicosanol. Comme exemples concrets de ces esters peuvent être cités le palmitate d'isopropyle, le stéarate d'éthyl-2 hexyle, l'oléate de dodécyle.

Pour favoriser le durcissement des compositions de l'invention, utilisées en couches épaisses, dont l'épaisseur est par exemple supérieure à 2 cm, il est recommandé d'introduire de l'eau à raison d'au plus 1 partie pour 100 parties des huiles A/.

Cet apport d'eau n'est pas nécessaire si les charges C/ en contiennent suffisamment. Pour faciliter son incorporation, l'eau est de préférence ajoutée sous forme d'une dispersion au sein d'un empâtage constitué par exemple des huiles $\alpha - \omega$ bis(triorganosiloxy) diorganopolysiloxaniques précitées et des charges C/.

La fabrication des compositions organopolysiloxaniques de l'invention s'effectue aisément par mélange des divers constituants dans des appareils appropriés tels que des malaxeurs et des pétrins. Pour obtenir des compositions homogènes, il est recommandé de mélanger tout d'abord les huiles A/ avec les charges C/ ; l'ensemble peut être chauffé au moins 30 minutes, à une température supérieure à 80°C, de manière à parfaire le mouillage des charges par les huiles. Au mélange obtenu, porté de préférence à une température inférieure à 80°C, par exemple de l'ordre de la température

11

ambiante, peuvent être ajoutés les autres constituants, c'est-à-dire les agents réticulants B/, les huiles de faible viscosité D/, les catalyseurs E/ et éventuellement des additifs et adjuvants divers et de l'eau.

De telles compositions ne sont pas stables au stockage, elles doivent donc être employées rapidement bien que la présence conjointe des quantités précitées des huiles D/ et des catalyseurs E/ permette d'atteindre des temps de travail d'au moins 70 minutes.

Ces compositions ne peuvent donc renfermer, pour le conditionnement et le stockage, tous les constituants A/, B/, C/, D/, E/. Sur le plan industriel elles doivent être fabriquées sous la forme de deux composants, l'un et l'autre stables au stockage.

Un premier composant, stable au stockage, peut comporter les constituants A/, B/, C/ et D/ ; il est préparé, de préférence, par introduction des agents réticulants B/ et des huiles D/ dans le mélange homogène précité formé par malaxage des huiles A/ et des charges C/.

Le deuxième composant comprend alors les catalyseurs E/.

Au moment de l'emploi, ces catalyseurs E/ sont simplement introduits, selon les conditions de la présente invention dans le premier composant ; ils peuvent être introduits tels quels, ou bien, pour faciliter leur dispersion (du fait qu'ils sont utilisés en faibles quantités) sous la forme de mélanges homogènes, comportant, en dehors d'eux, par exemple les additifs à base de polymères organopolysiloxaniques et/ ou de composés organiques précités et une fraction des charges C/ mises en oeuvre.

A titre indicatif, ces mélanges homogènes peuvent comporter 100 parties d'additifs à base de polymères organopolysiloxaniques et/ou de composés organiques, 5 à 50 parties de charges minérales C/ et 1 à 10 parties de catalyseurs E/.

D'autres modalités de présentation des compositions bicomposantes peuvent être retenues ; par exemple un premier composant contenant les huiles A/, les charges C/ et les huiles D/ et un deuxième composant contenant les agents ré-

12

ticulants B/ et les catalyseurs E/.

Dans tous les cas, il est nécessaire que les deux composants soient l'un et l'autre suffisamment fluides de manière à former aisément lors de leur mélange des compositions dont la viscosité s'échelonne par exemple de 10 000 à 200 000 mPa.s à 25°C.

Ces compositions qui restent suffisamment fluides pendant au moins 70 minutes, de préférence pendant au moins 90 minutes, après le mélange des deux composants, sont utilisables plus spécialement pour la fabrication de moules en élastomères silicones ; elles peuvent cependant être utilisées pour d'autres applications comme l'enrobage de matériels électroniques et l'enduction de surfaces métalliques ou de matières textiles ou cellulosiques.

Les moules fabriqués sont destinés à reproduire des pièces en matériaux cellulaires ou non, constitués de polymères organiques. Parmi ces matériaux peuvent être cités les polyesters , le polyéthylène, le polypropylène, les polyamides, le polychlorure de vinyle, le polystyrène. Il est toutefois recommandé d'utiliser ces moules pour la reproduction de pièces en polyuréthanne, étant donné qu'ils résistent remarquablement bien à l'attaque des constituants des mélanges (en particulier des polyisocyanates) conduisant aux matériaux en polyuréthanne.

Cette résistance est obtenue d'une façon surprenante par les quantités d'étain, selon l'invention, apportées par les catalyseurs E/ ; à ces quantités d'étain sont associées des quantités, selon l'invention, des huiles D/ pour obtenir des compositions ayant les temps de travail mentionnés ci-dessus.

Les moules réalisés à partir des compositions de l'invention permettent de fabriquer un nombre de pièces moulées en polyuréthanne supérieur d'au moins 50% au nombre de pièces fabriquées antérieurement avec des moules en élastomères silicones.

Les pièces moulées en polyuréthanne ainsi obtenues représentent des objets très variés, à but utilitaire ou dé-

13

coratif, tels que des tableaux de bord, des accoudoirs, du mobilier, des objets d'art.

Les exemples suivants illustrent l'invention. (les parties et les pourcentages sont exprimés en poids).

EXEMPLE 1

On fabrique 8 compositions catalysées $C_1$ à $C_8$, en opérant pour chaque composition catalysée, de la manière suivante :

Dans un malaxeur renfermant 100 parties d'une huile $\alpha - \omega$ dihydroxydiméthylpolysiloxanique de viscosité 4 500 mPa.s à 25°C sont progressivement introduites 40 parties d'une silice de diatomées de diamètre particulaire moyen 3 microns et 60 parties d'alumine de diamètre particulaire moyen 1 micron.

Le contenu du malaxeur est ensuite chauffé pendant 2 heures à 110°C. Lorsque la température du mélange résultant est retombée vers 25°C, sont introduites dans le malaxeur 8 parties de silicate de n-propyle et une quantité variable précisée ci-après, d'une huile $\alpha - \omega$ dihydroxydiméthylpoly-siloxanique de viscosité 50 mPa.s à 25°C.

A ce mélange est ensuite ajoutée une quantité variable également précisée ci-après, d'un dérivé de l'étain. La composition ainsi catalysée est maintenue pendant 10 minutes sous une pression de 4 000 Pa de manière à éliminer les bulles de gaz.

Pour chaque composition catalysée, on mesure sa viscosité initiale et établit son temps de travail en notant la durée au bout de laquelle la composition n'est plus capable de s'étaler lorsqu'elle est placée sur une surface horizontale.

Avec chaque composition catalysée, on fabrique, en outre, un moule en élastomère silicone en la versant dans un moule-maître constitué de 2 pièces ; un contre-moule en stratifié résine polyester-tissu de verre et une pièce moulée en résine epoxyde (représentant le modèle à reproduire) qui s'emboîte dans le contre-moule tout en laissant un espace suffisant pour la formation du moule en élastomère silicone. L'ensemble est abandonné pendant 24 heures à la température ambiante. Le moule obtenu, en élastomère silicone, est alors démoulé, puis il est abandonné pendant 8 jours à l'air ambiant.

Dans la cavité du moule, sensiblement de dimensions 140 X 70 X 40mm, sont coulés 168 g d'un mélange destiné à la fabrication de mousses de polyuréthanne semi-rigides. Ce mélange est préparé par brassage de :

- 100 parties d'un polyéthertriol de poids moléculaire environ 5 000 renfermant 75% en nombre de groupes hydroxyles primaires, d'indice d'hydroxyle 35, de viscosité 1 100 mm2/s à 20°C.

- 20 parties de dichloro-3,3' diamino-4,4' diphénylméthane.

- 0,9 partie d'une solution, à 33% dans le dipropylèneglycol, de triéthylénediamine.

- 0,5 partie de N,N diméthyléthanolamine.

- 18 parties de fluorotrichlorométhane.

- 30 parties de diisocyanato-4,4' diphénylméthane.

On ferme aussitôt l'ouverture du moule, attend pendant 6 minutes et procède au démoulage d'un bloc de mousse semi-rigide qui présente, sur sa surface, tous les détails du modèle. On recommence cette opération de fabrication de blocs de mousse et l'arrête seulement lorsqu'il se produit un début de collage, à l'interface, entre la paroi du moule et la surface des blocs de mousse. On note dans ces conditions le nombre de blocs fabriqués.

Dans le tableau ci-dessous sont indiquées (en parties) les quantités utilisées de l'huile $\alpha$ - $\omega$ dihydroxydiméthylpolysiloxanique de viscosité 50 mPa.s à 25°C ainsi que celles du dérivé de l'étain, la nature du dérivé de l'étain, le pourcentage d'étain que renferme chaque composition catalysée, le pourcentage de l'huile $\alpha$ - $\omega$ dihydroxydiméthylpolysiloxanique de viscosité 50 mPa.s à 25°C que renferme chaque composition catalysée, la viscosité de chaque composition catalysée à l'état fraîchement préparée, le temps de travail de chaque composition catalysée et le nombre de blocs de mousse fabriqués.

|  | $C_1$ | $C_2$ | $C_3$ | $C_4$ | $C_5$ | $C_6$ | $C_7$ | $C_8$ |
|---|---|---|---|---|---|---|---|---|
| huile $\alpha$-$\omega$ dihydroxydimé-thylpolysiloxanique de viscosité 50 mPa.s à 25°C | 10 | 12 | 10 | 15 | 10 | 4 | 10 | 10 |
| Dérivé de l'étain — quantités | 4,40 | 3,7 | 3 | 7 | 2,2 | 4,2 | 3,1 | 4,3 |
| Dérivé de l'étain — nature | dilaurate de dibutyl-étain | dilaurate de diméthyl-étain | dioctoate de diméthyl-étain | dioctoate de dibutyl-étain | dilaurate de dibutyl-étain | dilaurate de dibutyl-étain | (X1) | dioctoate de dioctyl-étain |
| Pourcentage d'étain dans chaque composition cata-lysée | 0,36 | 0,36 | 0,36 | 0,66 | 0,18 | 0,38 | 0,36 | 0,36 |
| Pourcentage de l'huile $\alpha$-$\omega$ dihydroxydiméthylpoly-siloxanique de viscosité 50 mPa.s à 25°C dans chaque composition catalysée. | 4,5 | 5,4 | 4,5 | 6,5 | 4,5 | 1,9 | 4,5 | 4,5 |
| Viscosité initiale de chaque composition catalysée, en mPa.s à 25°C | 30 000 | 33 000 | 31 000 | 36 000 | 29 000 | 32 000 | 35 000 | 30 000 |
| Temps de travail | 1h 55 | 1h 45 | 1h 40 | 1h 50 | 2h 20 | 45 min. | 2h 10 | 1h 55 |
| Nombre de blocs de mousse fabriqués | 190 | 185 | 180 | 170 | 110 | 180 | 72 | 120 |

15.

16

Le dérivé de l'étain (X1) est celui utilisé à l'exemple 1 du brevet américain 3 919 136 ; ce dérivé renferme 25,2% d'étain ; il est préparé en reproduisant l'exemple 1 du brevet américain 2 597 920 qui décrit le traitement thermique d'un mélange équimolaire d'oxyde de dibutylétain et de phtalate de diéthyle.

Les essais $C_5$, $C_6$, $C_7$, $C_8$ sont donnés à titre comparatif. L'essai $C_5$ montre l'utilité d'une quantité élevée du dérivé de l'étain ; des quantités diminuées de moitié (par rapport à $C_1$) font chuter nettement le nombre de blocs fabriqués. L'essai $C_6$ montre qu'un défaut d'huile de viscosité 50 mPa.s à 25°C ne permet pas d'obtenir un temps de travail valable industriellement, celui-ci doit être d'au moins 70 minutes.

Les essais $C_7$ et $C_8$ montrent que tous les sels carboxyliques de diorganoétain ne sont pas utilisables.

EXEMPLE 2

Dans un malaxeur contenant 100 parties d'une huile $\alpha - \omega$ dihydroxydiméthylpolysiloxanique de viscosité 15 000 mPa.s à 25°C, ayant 0,4% de motifs méthylvinylsiloxy, sont progressivement introduites 30 parties d'une silice de diatomées de diamètre particulaire moyen 3 microns.

Le contenu du malaxeur est ensuite chauffé pendant 2 heures à 115°C. Lorsque la température du mélange est retombée vers 25°C, 3 parties d'un mélange pondéral 50/50 constitué de silicate d'éthyle et de méthyltriméthoxysilane, 1 partie d'eau et 7 parties d'une huile $\alpha - \omega$ dihydroxydiméthylpolysiloxanique de viscosité 80 mPa.s à 25°C sont introduites dans le malaxeur.

Au mélange obtenu sont ajoutées 14 parties d'une composition formée par mélange de 60 parties d'une huile $\alpha - \omega$ bis(triméthylsiloxy) diméthylpolysiloxanique de viscosité 10 000 mPa.s à 25°C, 20 parties de silice de diatomées de diamètre particulaire moyen 3 microns et 20 parties d'un dérivé de l'étain de point de fusion 5°C, de formule globale $(TCOO)_2Sn(n-C_4H_9)_2$, le symbole T représente un radical aliphatique ayant, en moyenne, 14,6 atomes de carbone.

La composition ainsi catalysée est maintenue pendant 10 minutes sous une pression de 4 000 Pa. dans le dessein d'éliminer les bulles de gaz. Elle renferme 0,32% d'étain. et 4,2% de l'huile $\alpha$- $\omega$ dihydroxydiméthylpolysiloxanique de viscosité 80 mPa.s à 25°C.

Sa viscosité est de 22 000 mPa.s à 25°C et son temps de travail est de 1 heure 40 minutes.

Avec cette composition catalysée, on fabrique un moule en élastomère silicone en procédant comme indiqué à l'exemple 1. A l'aide de ce moule, on fabrique alors des blocs de mousses de polyuréthanne en coulant le mélange moussant décrit également à l'exemple 1. On s'arrête lorsqu'on observe un début d'accrochage entre la paroi interne du moule et la surface des blocs de mousse ; on fabrique dans ces conditions 202 blocs de mousse.

18

R E V E N D I C A T I O N S

1/ Compositions organopolysiloxaniques, durcissant dès la température ambiante, comportant :

A/ - 100 parties d'huiles α -ωdihydroxydiorganopoly-siloxaniques, de viscosité 600 à 100 000 mPa.s à 25°C, ayant des radicaux organiques, liés aux atomes de silicium, choisis parmi les radicaux méthyles, éthyles, n-propyles, vinyles, phényles, au moins 80 % de ces radicaux sont des radicaux méthyles et au plus 5 % sont des radicaux vinyles.

B/ - 1,5 à 12 parties d'agents réticulants choisis parmi :

(i) les silanes de formule $R_a Si(OR')_{4-a}$ dans laquelle le symbole R représente un radical hydrocarboné, halogéné ou non, ayant de 1 à 8 atomes de carbone, un radical cyanoalcoyle ayant de 3 à 4 atomes de carbone ; les symboles R', identiques ou différents, représentent des radicaux alcoyles ayant de 1 à 4 atomes de carbone, des radicaux de formule $-CH_2CH_2OG$ dans laquelle le symbole G représente un radical méthyle ou éthyle ; le symbole a représente zéro ou 1.

(ii) les produits d'hydrolyse partielle des silanes de formule $Si(OR')_4$, les symboles R' ayant la signification donnée sous (i).

C/ - 10 à 150 parties de charges pulvérulentes.

D/ - des huiles α -ωdihydroxydiorganopolysiloxaniques de viscosité 10 à 350 mPa.s à 25°C, ayant des radicaux organiques, liés aux atomes de silicium, choisis parmi les radicaux méthyles, vinyles, phényles, au moins 50 % de ces radicaux sont des radicaux méthyles et au plus 3 % sont des radicaux vinyles.

E/ - des catalyseurs de formule $(R''COO)_2 SnO_2$, dans laquelle les symboles R'', identiques ou différents représentent des radicaux hydrocarbonés aliphatiques ayant de 6 à 25 atomes de carbone, les symboles Q, identiques ou différents, représentent des radicaux alcoyles ayant de 1 à 6 atomes de carbone.

caractérisées en ce que :

a) les huiles D/ sont utilisées à raison de 7 à 23 parties, pour 1 partie d'étain apportée par les catalyseurs E/.

b) les catalyseurs E/ sont introduits en une quantité suffisante pour fournir de 0,22 à 1 partie d'étain dans 100 parties de compositions.

2/ Compositions selon la revendication 1/ caractérisées en ce que :

a) les huiles D/ sont utilisées à raison de 8 à 21 parties pour 1 partie d'étain apportée par les catalyseurs E/.

b) les catalyseurs E/ sont introduits en une quantité suffisante pour fournir de 0,25 à 0,95 partie d'étain dans 100 parties des compositions.

3/ Procédé de préparation des compositions selon l'une quelconque des revendications 1 et 2, caractérisé en ce que :

a) l'on prépare des mélanges stables au stockage par malaxage des huiles A/ et des charges C/, suivi de l'introduction des agents réticulants B/ et des huiles D/.

b) puis ajoute, au moment de l'emploi des compositions, les catalyseurs E/.

4/ Utilisation des compositions selon l'une quelconque des revendications 1 et 2, pour la préparation de moules en élastomères silicones.

## DOCUMENTS CONSIDERES COMME PERTINENTS

| Catégorie | Citation du document avec indication, en cas de besoin, des parties pertinentes | Revendication concernée |
|---|---|---|
| | FR - A - 2 108 040 (GENERAL ELECTRIC)<br><br>* Revendication 1; page 15, lignes 14-22 *<br><br>-- | 1 |
| | FR - A - 2 179 639 (RHONE-POULENC)<br><br>* Revendication 1; page 4, lignes 21-24 *<br><br>-- | 1 |
| | CHEMICAL ABSTRACTS, vol. 86, 1977 page 76, abrégé no. 74191k, Columbus, Ohio, USA,<br><br>& JP - A - 76 143 062 (SHIN-ETSU CHEMICAL IND. CO.)<br><br>* Abrégé *<br><br>-- | 1 |
| | CHEMICAL ABSTRACTS, vol. 83, 1975 page 92, abrégé no. 180789j, Columbus, Ohio, USA,<br><br>& JP - A - 75 66 553 (SHIN-ETSU CHEMICAL IND. CO.)<br><br>* Abrégé *<br><br>-- | 1 |
| | FR - A - 2 228 814 (RHONE-POULENC)<br><br>* Revendication 1 *<br><br>-- | 1 |
| | FR - A - 2 190 876 (GENERAL ELECTRIC)<br><br>* Revendication 1 *<br><br>---- | 1 |

**CLASSEMENT DE LA DEMANDE (Int. Cl. 3)**

C 08 L 83/04
B 29 C 1/02

**DOMAINES TECHNIQUES RECHERCHES (Int. Cl. 3)**

C 08 L 83/04

**CATEGORIE DES DOCUMENTS CITES**

X: particulièrement pertinent
A: arrière-plan technologique
O: divulgation non-écrite
P: document intercalaire
T: theorie ou principe à la base de l'invention
E: demande faisant interférence
D document cite dans la demande
L document cite pour d autres raisons

&: membre de la même famille, document correspondant

Le présent rapport de recherche a ete etabli pour toutes les revendications

| Lieu de la recherche | Date d achevement de la recherche | Examinateur |
|---|---|---|
| La Haye | 18-01-1980 | DEPIJPER |

OEB Form 1503.1  06.78